# EUROPÄISCHE PATENTANMELDUNG

(11) **EP 1 348 784 A1**
(43) Veröffentlichungstag der Anmeldung: **01.10.2003**
(21) Anmeldenummer: 03001493.0
(22) Anmeldetag: 23.01.2003
(51) Int. Cl.: D01H 4/12

(54) **Fettpatrone für eine Spurlagerung von Offenend-Spinnrotoren**

(30) Priorität: 25.03.2002 DE 10214488
(71) Anmelder: MASCHINENFABRIK RIETER AG, 8406 Winterthur (CH)
(72) Erfinder: Zott, Werner, 73072 Donzdorf (DE)
(74) Vertreter: Patentanwälte Ruff, Wilhelm, Beier, Dauster & Partner

(57) **Zusammenfassung**

Beschrieben wird eine austauschbare Fettpatrone für eine Spurlagerung von Offenend-Spinnrotoren. Die Fettpatrone enthält eine mit Schmierfett gefüllte Fettkammer (6), in welcher eine Spurlagerkugel (7) angeordnet ist. An einer vorderen Gehäusewand (10) der Fettpatrone ist eine Bohrung (11) für einen Rotorschaft (2), an einer hinteren Gehäusewand (8) eine Durchtrittsbohrung (9) für ein Widerlager (3) vorgesehen. Zur Montageerleichterung ist das Gehäuse in ein die vordere Gehäusewand aufweisendes erstes Teilgehäuse (14) und ein die Gehäusewand aufweisendes zweites Teilgehäuse (15) unterteilt.

## Beschreibung

Die Erfindung betrifft eine Fettpatrone für eine Spurlagerung von Offenend-Spinnrotoren, mit einem im Wesentlichen zylindrischen Gehäuse, welches eine Schmierfett enthaltende Fettkammer aufweist, mit einer in der Fettkammer angeordneten Spurlagerkugel, mit einer die Fettkammer begrenzenden hinteren Gehäusewand, die eine Durchtrittsbohrung für ein Widerlager aufweist, mit einer vorderen Gehäusewand, die eine erste Bohrung für einen Rotorschaft aufweist, und mit einer Zwischenwand, die eine zweite, in die Fettkammer mündende Bohrung für einen Rotorschaft aufweist.

Eine Fettpatrone dieser Art ist durch die DE 198 17 911 A1 Stand der Technik. Die bekannte Fettpatrone ist zusammen mit der Spurlagerkugel als Wegwerfteil ausgebildet, wobei nach Verbrauch des Schmierfetts die Fettpatrone gegen eine neue Fettpatrone mit neuem Schmierfett ausgetauscht wird. Hierdurch werden der Arbeitsaufwand und somit auch die Kosten für das Nachschmieren der Spurlagerung wesentlich reduziert. Derartige Fettpatronen werden an einer ortsfesten Halterung eines Offenend-Spinnaggregates lösbar befestigt, beispielsweise mittels Klipsverbindungen oder Steckverbindungen oder dergleichen.

Fettpatronen der genannten Art werden in neu ausgelieferten Offenend-Spinnmaschinen erst seit einigen Jahren verwendet. Wegen der offensichtlichen Vorteile solcher Fettpatronen besteht aber häufig der Wunsch, ältere Offenend-Spinnmaschinen mit solchen Fettpatronen durch Nachrüsten zu modernisieren. Dabei werden dann ursprüngliche Spurlagerungen, welche beispielsweise mit Ölschmierungen ausgerüstet waren, durch Spurlagerungen mit den genannten Fettpatronen ersetzt. Da ältere Offenend-Spinnmaschinen jedoch nicht für die genannten Fettpatronen ursprünglich konzipiert waren, besteht bei einem Nachrüsten häufig das Problem, auf Grund einer räumlichen Beengtheit solche Fettpatronen nur mit hohem Nacharbeitsaufwand im Bereich der Spurlagerungen nachzurüsten.

Der Erfindung liegt die Aufgabe zu Grunde, eine Fettpatrone der eingangs genannten Art so zu gestalten, dass auch ein relativ einfaches Nachrüsten älterer Offenend-Spinnmaschinen mit Fettpatronen möglich ist.

Die Aufgabe wird dadurch gelöst, dass das Gehäuse etwa im Bereich der Zwischenwand in ein die vordere Gehäusewand aufweisendes erstes Teilgehäuse und ein die hintere Gehäusewand aufweisendes zweites Teilgehäuse unterteilt ist.

Auf Grund dieser Gestaltung wird das Gehäuse der Fettpatrone in zwei aneinanderfügbare Teilgehäuse unterteilt, die jeweils eine deutlich geringere Länge als das fertig montierte Gehäuse aufweisen. Es wird dadurch der Vorteil erhalten, nicht das komplette Gehäuse der Fettpatrone bei einem Nachrüsten montieren zu müssen, sondern zunächst das die hintere Gehäusewand aufweisende zweite Teilgehäuse nachzurüsten und anschließend das die vordere Gehäusewand aufweisende erste Teilgehäuse anzufügen. Es hat sich gezeigt, dass dadurch ein deutlich kostengünstigeres Nachrüsten älterer Offenend-Spinnmaschinen mit Fettpatronen möglich wird, da nicht erst ein ursprünglich nicht vorhandener Montageraum durch Nacharbeiten geschaffen werden muss.

Trotz dieser Teilbarkeit ist es möglich, grundsätzliche Vorteile der bekannten Fettpatrone beizubehalten, die unter anderem darin bestehen, dass in der Fettkammer die Spurlagerkugel mit Abstand umfassende fingerartige Rührflügel vorgesehen sind, deren Achse koaxial zum Rotorschaft liegt. Durch zeitweiliges Drehen dieser Rührflügel bei einer Wartungsarbeit kann von Zeit zu Zeit verbrauchtes Schmierfett durch "Umrühren" von der alten Stelle entfernt und frisches Schmierfett wieder an die Spurlagerkugel herangebracht werden. Dadurch verlängern sich die Intervalle, nach denen eine Fettpatrone insgesamt ausgetauscht werden muss. Dieser Vorteil von Rührflügeln lässt sich beibehalten, wenn die Zwischenwand an einem Gehäuseteil angebracht wird, welches gegenüber dem ersten Teilgehäuse und dem zweiten Teilgehäuse verdrehbar angeordnet ist. Vorteilhaft wird das die Zwischenwand enthaltende Gehäuseteil im ersten Teilgehäuse verdrehbar gelagert.

Die Länge des ersten Teilgehäuses sollte wenigstens ein Drittel der Länge des zweiten Teilgehäuses betragen. Dabei wird zweckmäßig vorgesehen, dass das erste Teilgehäuse und das zweite Teilgehäuse jeweils miteinander zugeordneten und der Montage dienenden Umfangsflächen versehen sind. Dadurch lässt sich das erste Teilgehäuse durch einfaches Aufschieben während der Montage auf dem bereits vormontierten zweiten Teilgehäuse anbringen.

Weitere Merkmale und Vorteile der Erfindung ergeben sich aus der nachfolgenden Beschreibung eines Ausführungsbeispiels.

Es zeigen:
Figur 1 in vergrößerter Darstellung einen Axialschnitt durch eine erfindungsgemäße Fettpatrone, wobei mit dieser Fettpatrone zusammenwirkende Bauteile strichpunktiert angedeutet sind,
Figur 2 einen Querschnitt durch die Fettpatrone längs der Schnittfläche II-II der Figur 1.

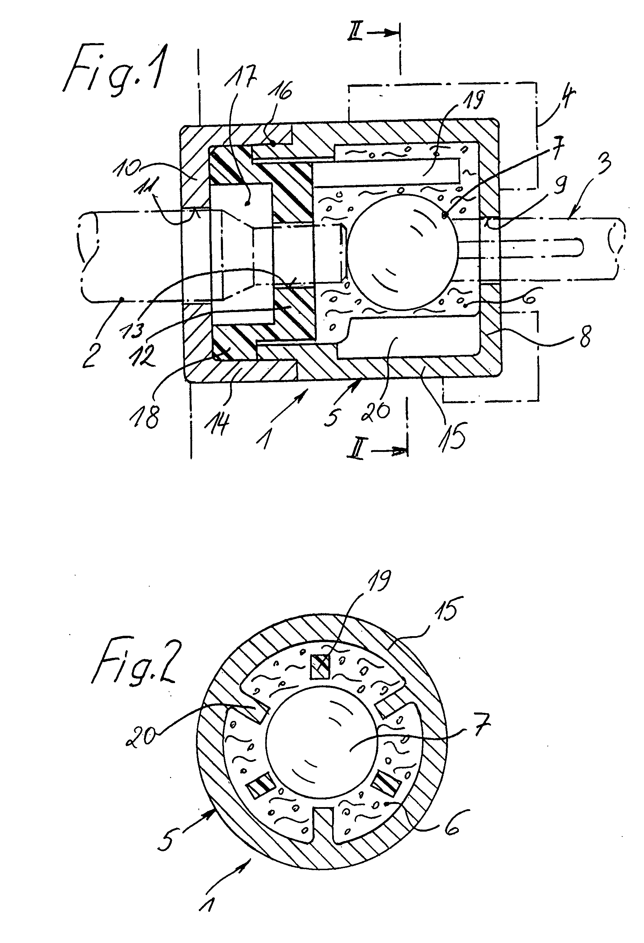

Die in den Figuren 1 und 2 dargestellte Fettpatrone 1 ist für eine Spurlagerung von Offenend-Spinnrotoren vorgesehen, von denen eine Vielzahl in einer Offenend-Spinnmaschine vorhanden ist. Zusätzlich zur dargestellten Fettpatrone 1 sind ein damit zusammenwirkender Rotorschaft 2 sowie ein Widerlager 3 und eine dem Festklemmen der Fettpatrone 1 dienende Halterung 4 strichpunktiert angedeutet.

Die Fettpatrone 1 enthält ein im Wesentlichen zylindrisches Gehäuse 5, welches eine Schmierfett enthaltende Fettkammer 6 aufweist. In der Fettkammer 6 ist eine Spurlagerkugel 7 angeordnet, die von Haus aus ein Bestandteil der Fettpatrone 1 ist und an welcher sich bei Betrieb der Rotorschaft 2 abstützt, während sich die Spurlagerkugel 7 ihrerseits an dem bolzenartigen geschlitzten Widerlager 3 abstützt.

Das Gehäuse 5 weist eine hintere stirnseitige Gehäusewand 8 auf, welche mit einer Durchtrittsbohrung 9 für das bolzenartige Widerlager 3 versehen ist. An der vorderen Stirnseite der Fettpatrone 1 ist eine vordere Gehäusewand 10 vorgesehen, welche eine erste Bohrung 11 für den Rotorschaft 2 aufweist.

Während die hintere Gehäusewand 8 die Fettkammer 6 unmittelbar begrenzt, schließt die vordere Gehäusewand 10 nicht direkt an die Fettkammer 6 an, sondern es ist eine die Fettkammer 6 begrenzende Zwischenwand 12 vorgesehen, welche eine zweite Bohrung 13 für den Rotorschaft 2 aufweist. Diese zweite Bohrung 13, die einen gegenüber der ersten Bohrung 11 verringerten Durchmesser aufweist, mündet in die Fettkammer 6. Die Durchmesser des durch die erste Bohrung 11 und die zweite Bohrung 13 hindurchgesteckten Rotorschaftes 2 sind an die Durchmesser der ersten Bohrung 11 und der zweiten Bohrung 13 angepasst, und zwar so, dass sich eine berührungslose Abdichtung der Fettkammer 6 nach außen hin ergibt.

Die Fettpatrone 1 ist insgesamt als Wegwerfteil ausgebildet, welches zusammen mit der Spurlagerkugel 7 ersetzt werden kann, wenn das Schmierfett verbraucht ist. Die Fettpatrone 1 ist also ein insgesamt austauschbares Ersatzteil, welches leicht lösbar an der Halterung 4 angebracht ist. Anstelle der ausgebauten Fettpatrone 1 wird dann eine neue Fettpatrone 1 mit dem erforderlichen Vorrat an Schmierfett und mit einer neuen Spurlagerkugel 7 eingebaut. Eine derartige als Ersatzteil angelieferte Fettpatrone 1 enthält in nicht dargestellter Weise zunächst zwei einfache stirnseitige Abdeckungen für die erste Bohrung 11 und für die Durchtrittsbohrung 9, wobei diese Abdeckungen bei der Montage der Fettpatrone 1 an der Halterung 4 dann entfernt werden, wenn der Rotorschaft 2 und das Widerlager 3 bis zur Fettkammer 6 eingeführt werden.

Wenn derartige Fettpatronen 1 bei älteren Offenend-Spinnmaschinen, deren Spurlagerungen nicht für eine Fettschmierung ausgelegt waren, nachgerüstet werden sollen, dann können sich bei der Montage Probleme ergeben, wenn der für ein Nachmontieren erforderliche Raum etwas beengt ist. Aus diesem Grunde ist vorgesehen, die Fettpatrone 1 so zu gestalten, dass sie bei beengten räumlichen Verhältnissen relativ leicht montiert werden kann, ohne an der Halterung 4 zuvor umfangreichere Nacharbeiten vornehmen zu müssen.

Die Aufgabe wird dadurch gelöst, dass das Gehäuse 5 etwa im Bereich der Zwischenwand 12 in ein die vordere Gehäusewand 10 aufweisendes erstes Teilgehäuse 14 und ein die hintere Gehäusewand 8 aufweisendes zweites Teilgehäuse 15 unterteilt ist. Dabei ist die Anordnung so getroffen, dass die Länge des ersten Teilgehäuses 14 wenigstens ein Drittel der Länge des zweiten Teilgehäuses 15 beträgt.

Auf Grund dieser Aufteilung des Gehäuses 5 in zwei Teilgehäuse 14 und 15 ergeben sich für eine nachträgliche Montage zur Modernisierung älterer Offenend-Spinnmaschinen insgesamt in ihrer Länge verkürzt Bauteile, die dann nicht als gemeinsame Fettpatrone 1, sondern bei der Montage einzeln angebaut und während der Montage zu einer gemeinsamen Fettpatrone 1 zusammengefügt werden. Da das Schmierfett an sich relativ zäh ist, ergeben sich während der kurzen Montagezeit keine Probleme, die etwa darin bestehen könnten, dass das Schmiermittel aus der Fettkammer 6 in unerwünschter Weise austritt. Man fügt also in die Halterung 4 zunächst das zweite, relativ kurze Teilgehäuse 15 ein und steckt dann das erste Teilgehäuse 14 auf. Für jedes Teilgehäuse 14 oder 15 allein wird dadurch ein kürzerer Montageraum benötigt, als es für eine zuvor komplett montierte Fettpatrone 1 insgesamt der Fall sein müsste.

Zweckmäßig sind das erste Teilgehäuse 14 und das zweite Teilgehäuse 15 jeweils mit einander zugeordneten und der Montage dienenden Umfangsflächen 16 versehen. Die eine Umfangsfläche 16 ist am ersten Teilgehäuse 14 also innen, die andere Umfangsfläche 16 am zweiten Teilgehäuse 15 außen angebracht, so dass die beiden Teilgehäuse 14 und 15 in ihrer Längsrichtung einfach aneinandergefügt werden können. Dabei handelt es sich zweckmäßig an den Umfangsflächen 16 um einen Presssitz.

Wie bereits erwähnt, begrenzt die vordere Gehäusewand 10 nicht unmittelbar die Fettkammer 6. Vielmehr gibt es zwischen der Fettkammer 6 und der vorderen Gehäusewand 10 einen so genannten Auffangraum 17 für aus der Fettkammer 6 austretende Schmierfettbestandteile.

Bisweilen kann es vorkommen, dass kein Schmierfett an die kritische Stelle zwischen der Stirnfläche des Rotorschaftes 2 und der Spurlagerkugel 7 gelangt. Dies ist insbesondere dann der Fall, wenn in nächster Nähe der Spurlagerkugel 7 das Schmierfett verbraucht ist, so dass es dann zu einer Mangelschmierung kommen kann. Aus diesem Grunde sind in Ausgestaltung der Erfindung, wie dies auch beim eingangs genannten Stand der Technik der Fall war, Mittel vorgesehen, das in der Fettkammer 6 befindliche Schmierfett durch eine Bedienungsperson in gewissen Zeitintervallen "umzurühren", wodurch verbrauchtes Schmierfett von der alten Stelle entfernt und frisches Schmierfett an die Spurlagerkugel 7 herangeführt wird.

In Ausgestaltung der Erfindung ist die Zwischenwand 12 somit an einem gesonderten Gehäuseteil 18 angebracht, welches gegenüber dem ersten Teilgehäuse 14 und dem zweiten Teilgehäuse 15 verdrehbar angeordnet ist. Zweckmäßig ist dabei das die Zwischenwand 12 enthaltende Gehäuseteil 18 im ersten Teilgehäuse 14 verdrehbar gelagert. Zusätzlich ist vorgesehen, dass das die Zwischenwand 12 enthaltende Gehäuseteil 18 mit in die Fettkammer 6 hineinragenden Rührflügeln 19 versehen ist, welche die Spurlagerkugel 7 mit Abstand fingerartig umgeben. Die Achse dieser Rührflügel 19 liegt dabei koaxial zur Achse des Rotorschaftes 2. Durch gelegentliches Drehen der Rührflügel 19, was nach Entfernen des Rotorschaftes 2 durch eine Bedienungsperson mittels eines Werkzeuges vorgenommen werden kann, kann das Schmierfett entweichen, und es wird dabei unverbrauchtes Schmierfett an die kritische Abstützstelle des Rotorschaftes 2 an der Spurlagerkugel 7 hingedrückt.

Günstig ist es dabei, wenn den Rührflügeln 19 stationär angeordnete Anschlagrippen 20 zugeordnet sind, die beispielsweise radial von der hohlzylindrischen Umfangswand des zweiten Teilgehäuses 15 nach innen abragen können. Zwischen diesen Anschlagrippen 20 können die Rührflügel 19 verdrehbar sein, und wenn sie gegen eine Anschlagrippe 20 anstoßen, bedeutet dies für die Bedienungsperson, dass sie beim nächsten Nachschmieren die Rührflügel 19 in die andere Richtung verdrehen muss. Man dreht die Rührflügel 19 immer in diejenige Richtung, die gerade möglich ist.

Auch die Anschlagrippen 20, beispielsweise drei oder vier an der Zahl, können die Spurlagerkugel 7 in geringem Abstand umgeben, so dass diese beim Entfernen des Rotorschaftes 2 als Stütze der Spurlagerkugel 7 dienen können.

## Patentansprüche

1. Fettpatrone für eine Spurlagerung von Offenend-Spinnrotoren, mit einem im Wesentlichen zylindrischen Gehäuse, welches eine Schmierfett enthaltende Fettkammer aufweist, mit einer in der Fettkammer angeordneten Spurlagerkugel, mit einer die Fettkammer begrenzenden hinteren Gehäusewand, die eine Durchtrittsbohrung für ein Widerlager aufweist, mit einer vorderen Gehäusewand, die eine erste Bohrung für einen Rotorschaft aufweist, und mit einer Zwischenwand, die eine zweite, in die Fettkammer mündende Bohrung für einen Rotorschaft aufweist, **dadurch gekennzeichnet, dass** das Gehäuse (5) etwa im Bereich der Zwischenwand (12) in ein die vordere Gehäusewand (10) aufweisendes erstes Teilgehäuse (14) und ein die hintere Gehäusewand (8) aufweisendes zweites Teilgehäuse (15) unterteilt ist.

2. Fettpatrone nach Anspruch 1, **dadurch gekennzeichnet, dass** die Zwischenwand (12) an einem Gehäuseteil (18) angebracht ist, welches gegenüber dem ersten Teilgehäuse (14) und dem zweiten Teilgehäuse (15) verdrehbar angeordnet ist.

3. Fettpatrone nach Anspruch 2, **dadurch gekennzeichnet, dass** das die zweite Zwischenwand (12) enthaltende Gehäuseteil (18) im ersten Teilgehäuse (14) verdrehbar gelagert ist.

4. Fettpatrone nach Anspruch 2 oder 3, **dadurch gekennzeichnet, dass** das die Zwischenwand (12) enthaltende Gehäuseteil (18) mit in die Fettkammer (6) hineinragenden Rührflügeln (19) versehen ist, welche die Spurlagerkugel (7) mit Abstand fingerartig umgeben.

5. Fettpatrone nach einem der Ansprüche 1 bis 4, **dadurch gekennzeichnet, dass** die an der Zwischenwand (12) vorgesehene zweite Bohrung (13) einen gegenüber der in der vorderen Gehäusewand (10) vorgesehenen ersten Bohrung (11) verringerten Durchmesser aufweist.

6. Fettpatrone nach einem der Ansprüche 1 bis 5, **dadurch gekennzeichnet, dass** zwischen der vorderen Gehäusewand (10) und der Zwischenwand (12) ein Auffangraum (17) für aus der Fettkammer (6) austretende Schmierfettbestandteile vorgesehen ist.

7. Fettpatrone nach einem der Ansprüche 1 bis 6, **dadurch gekennzeichnet, dass** die Länge des ersten Teilgehäuses (14) wenigstens ein Drittel der Länge des zweiten Teilgehäuses (15) beträgt.

8. Fettpatrone nach einem der Ansprüche 1 bis 7, **dadurch gekennzeichnet, dass** das erste Teilgehäuse (14) und das zweite Teilgehäuse (15) jeweils mit einander zugeordneten und der Montage dienenden Umfangsflächen (16) versehen sind.
